# EUROPEAN PATENT SPECIFICATION

(11) **EP 1 271 028 B1**
(45) Date of publication and mention of the grant of the patent: **31.08.2005**
(21) Application number: 02013748.5
(22) Date of filing: 21.06.2002
(51) Int. Cl.: F16K 24/04, B67D 5/34

(54) **Check valve and filter assembly, especially for water cooler assemblies**
Rückschlagventil und Filtervorrichtung, insbesondere für Wasserkühler
Soupape d'anti-retour et filtre, en particulier pour refroidisseurs d'eau

(30) Priority: 26.06.2001 US 301375 P
(43) Date of publication of application: 02.01.2003
(73) Proprietor: Filtertek Inc., Illinois 60043 (US)
(72) Inventor: Ruscke, Rick, R., Woodstock, Illinois 60098 (US)
(74) Representative: Brose, D. Karl

(56) References cited:
- FR-A- 2 242 896
- US-A- 4 742 843
- US-A- 5 682 917
- US-B1- 6 167 921
- PATENT ABSTRACTS OF JAPAN vol. 008, no. 136 (M-304), 23 June 1984 (1984-06-23) & JP 59 034932 A (NISSAN JIDOSHA KK), 25 February 1984 (1984-02-25)

## Description

### FIELD OF THE INVENTION

This invention relates to check valves, and in particular to check valves operative at a liquid and gas interface that closes to prevent a substantial flow of liquid beyond the valve but returns to a normally open position upon experiencing a slight vacuum from the liquid originating region, and filter assemblies incorporating such valves.

### BACKGROUND OF THE INVENTION

Check valves in their broadest sense are well known for a variety of applications. One purpose of a check valve, such as when it is used in an area of a structure that experiences a liquid and gas interface, is to allow the egress of gas but to prevent the substantial flow of liquid. Such a purpose has been found useful, for example, in the area of water cooler design and fabrication.

In the field of bottled water coolers that are typically found in the home or office, a cooler housing supports an upwardly open reservoir that supplies users with water on demand via dispensing faucets or the like. The cooler housing and reservoir are designed to support a water bottle of 11,34 to 18.9 liters (three or five gallons (U.S.)) capacity that is typically inverted to allow water to flow downwardly into the reservoir to a level sufficient to cover an open bottle mouth formed in the bottle neck. In normal operation, downward water flow from the bottle is accompanied by an upward exchange of air or gas from the reservoir into the bottle, and this gas-water exchange between the overlying bottle and the underlying reservoir continues until the water level of the reservoir rises sufficiently to cover the bottle mouth, at which point further air or gas exchange is halted and consequent downward water flow is stopped. As water is dispensed from the faucets that are supplied by the reservoir, the water level lowers to the point where the water level is below the bottle mouth, at which point the gas-water exchange may resume to enable additional water to flow downwardly into the reservoir. The general construction of water coolers is described in U.S.-B1 6,167,921 B1, US-B1 6,029,860, US-B1 6,003,318, US-B1 6,123,232, US-B1 5,676,278; and US-B1 5,667,103; all of which are incorporated by reference herein.

The reservoir interior is typically designed to communicate with ambient air so that when the water level of the reservoir lowers due to typical water dispensing by users, ambient air takes its place prior to the gas-water exchange that replenishes the reservoir. Thus the upper reservoir chamber may be provided with an air filter so that air cannot enter the reservoir except by passing through the air filter medium. The description of such air filters in communication with water cooler reservoirs is found in U.S.-B1 6,167,921 B1 and in U.S.-B1 6,029,860 both of which are incorporated by reference herein. To protect such air filters from water flow and/or to prevent upward water flow therethrough in the event of reservoir overfilling, such as might occur with the use of a cracked bottle, an air filter unit may include a check valve in the air filter port, as can be found in U.S.-B1-6,167,921 B1; which appears to be a typical ball valve arrangement. A check valve having the features of the preamble of claim 1 is known from US-B1-6 167 921.

One problem that has now been encountered in the known check valves used in water cooler air filter units is that although these check valves may prevent the substantial flow of liquids beyond them, they are less than ideal in returning to their normally open position following the lowering of the liquid or water level of the reservoir. The known check valves that are manufacturable and cost effective suffer from valve sticking or valve structure distortion. This results in an internal pressure for any gas in the reservoir of substantially less than ambient, which has been found to substantially diminish the flow rate of dispensed fluids, such as water, from the dispensing faucets or outlets of the cooler. For example, it is believed that a known check valve comprising an imperforate disk and ring seal in a housing that includes an air filter media has experienced such a difficulty. Further, it is believed that the typical ball valve arrangement may suffer from similar disadvantages in performance, manufacturability and/or cost effectiveness.

It is a task to be solved by the present invention to provide for a cost effective and manufacturable check valve for a liquid-gas interface, that is normally open to permit gas passage but will close to substantially stop the flow of liquid in one direction and will reliably open to allow gas to flow in the other direction upon experiencing a low vacuum pressure differential across the valve structure from, for example, the reservoir of a water cooler, that may be of less than 498 Pa (two inches of water column).

It would also be desirable if the check valve were readily manufacturable as a part of an air filter assembly, in which the check valve is so configured to protect the air filter from exposure to substantial quantities or flows of liquids, which unit is cost effectively constructed and simple to manufacture, so that the unit may have application in a typical water cooler or other such liquid dispensing structures that include a reservoir or the like.

### BRIEF SUMMARY OF THE INVENTION

In a check valve of the above-identified kind as known from U.S.-B1-6,167,921, the above task is solved by the features that a bell shaped member is provided with a portion of the member received within the tubular chamber and having a mouth, a closed base and a flexible wall extending between the mouth and the base that includes an annular portion of a diameter greater than that of the seating surface of the side wall of the chamber and greater than the perimeter of the mouth, wherein the specific gravity of the bell shaped member volume as defined by the opening of the mouth, the base and the wall therebetween is less than one, that the mouth is disposed within the tubular chamber portion facing upstream and the base is generally downstream of the mouth and, that a retaining member is affixed to the base of the bell shaped member is adapted to the side wall of the chamber, whereby the retaining member arrests movement of the bell shaped member when gas flows in the direction reverse of the first direction past the bell shaped member and when liquid flows upstream of the bell shaped member, the wall of the bell shaped member peripherally contacts the seating surface of the chamber to thereby stop the flow of liquid upstream of the bell shaped member.

In detail, the invention can be further improved by the features that the mouth is having an inner diameter less than the exterior diameter of the annular portion and the bell shaped member is consisting of a flexible synthetic resin and, that the retaining member is consisting of a synthetic resin extending generally downstream of the bell shaped member base and is adapted to engage the chamber side wall downstream of the seating surface and is having a portion extending laterally to the downstream direction adapted to engage the side wall of the chamber downstream of the seating surface.

A further improvement of such a check valve is characterized by the features that the valve is forming a part of an air filter assembly, that the chamber is provided in a housing with the chamber having an inlet and an outlet as the upstream and downstream openings, respectively, that a filtration medium is affixed over the outlet of the chamber, that the bell shaped member is disposed in the chamber with the mouth toward the inlet and the base is facing toward the outlet and, in that the retaining member is extending generally toward the outlet and further is including a portion extending over the outlet and adapted to engage a portion of the housing, whereby the retaining member arrests movement of the bell shaped member toward the inlet of the chamber when air flows through the filtration medium toward the inlet and the bell shaped member wall peripherally contacts the seating surface of the chamber at an initial seating wall portion to thereby stop the flow of liquid when liquid flows from the inlet past the seating surface, to thereby provide the normally open check valve passing gas between the inlet and the outlet and preventing liquid flow through the filtration media.

Further preferred details and improvements are contained in the further subclaims 4 to 14.

Preferred embodiments of the invention have the distinct advantage of providing a normally open check valve that permits gas passage but reliably closes to substantially stop the flow of liquid in one direction and that reliably opens to allow gas to flow in the other direction upon experiencing a low vacuum pressure differential across the valve structure. Moreover, at least in one embodiment, the check valve is of simple and economical design, but has good flow characteristics, and is readily manufacturable. Further, when used in a filter assembly, the cost of a check valve is very important to the overall assembly cost. Moreover, at least in one embodiment, the filter assembly is of economical and simple design, has acceptable flow characteristics, and is also readily manufacturable.

Other features and advantages of the present invention will become more fully apparent from the following description of the preferred embodiments, the appended claims and the accompanying drawings.

### BRIEF DESCRIPTION OF SEVERAL VIEWS OF THE DRAWINGS

FIG. 1 is a top plan view of an embodiment of a filter assembly and an embodiment of a check valve.
FIG. 2 is a cross-sectional view taken along line 2-2 of FIG. 1 and showing the embodiment of the check valve in its normally open position.
FIG. 3 is a cross-sectional view taken along line 3-3 of FIG. 1 and showing the embodiment of the check valve in its normally open position.
FIG. 4 is the same view as FIG. 3, except that the embodiment of the check valve is shown in its closed position.
FIG. 5 is a top plan view of an embodiment of a housing member.
FIG. 6 is a side view of the embodiment of a housing member of FIG. 5.
FIG. 7 is a cross-sectional view taken along line 7-7 of FIG. 6.
FIG. 8 is a top plan view of an embodiment of a check valve member for incorporation into an embodiment of a housing member.
FIG. 9 is a cross-sectional view taken along line 9-9 of FIG. 8.
FIG. 10 is a cross-sectional view taken along line 10-10 of FIG. 9.
FIG. 11 is a top plan view of an embodiment of a cover member.
FIG. 12 is a side view of the embodiment of a cover member of FIG. 11.
FIG. 13 is a cross-sectional view taken along line 13-13 of FIG. 11.
FIG. 14 is an exploded cross-sectional view of another partially assembled embodiment of a filter assembly and another assembled embodiment of a check valve showing the check valve in a closed position.
FIG. 15 is a cross-sectional view of the assembled embodiments of FIG. 14 showing the check valve in its normally open position.
FIG. 16 is a cross-sectional view of the assembled embodiments of FIG. 14 showing the check valve in its normally open position and taken from a different angular view from that of FIG. 15.
FIG. 17 is an exploded cross-sectional view of another partially assembled embodiment of a filter assembly and another assembled embodiment of a check valve showing the check valve in a closed position.
FIG. 18 is a top plan view of the embodiment of a filter assembly and the embodiment of a check valve of FIG. 17.
FIG. 19 is a top plan view of another embodiment of a check valve member for incorporation into an embodiment of a housing member.
FIG. 20 is a cross-sectional view taken along line 20-20 of FIG. 19.
FIG. 21 is a cross-sectional view taken along line 21-21 of FIG. 20.
FIG. 22 is cross-sectional view taken along line 22-22 of FIG. 18.
FIG. 23 is a cross-sectional view taken along line 23-23 of FIG. 18.
FIG. 24 is the same view as FIG. 22, with a portion broken out, showing an embodiment of the check valve in its normally open position.
FIG. 25 is the same view as FIG. 24, with a portion broken out, showing an embodiment of the check valve in a closed position.
FIG. 26 is a top plan view of yet another embodiment of a check valve member for incorporation into an embodiment of a housing member.
FIG. 27 is a cross-sectional view taken along line 27-27 of FIG. 26.
FIG. 28 is a cross-sectional view taken along line 28-28 of FIG. 27

### DETAILED DESCRIPTION OF THE DRAWINGS AND PREFERRED EMBODIMENTS OF THE INVENTION

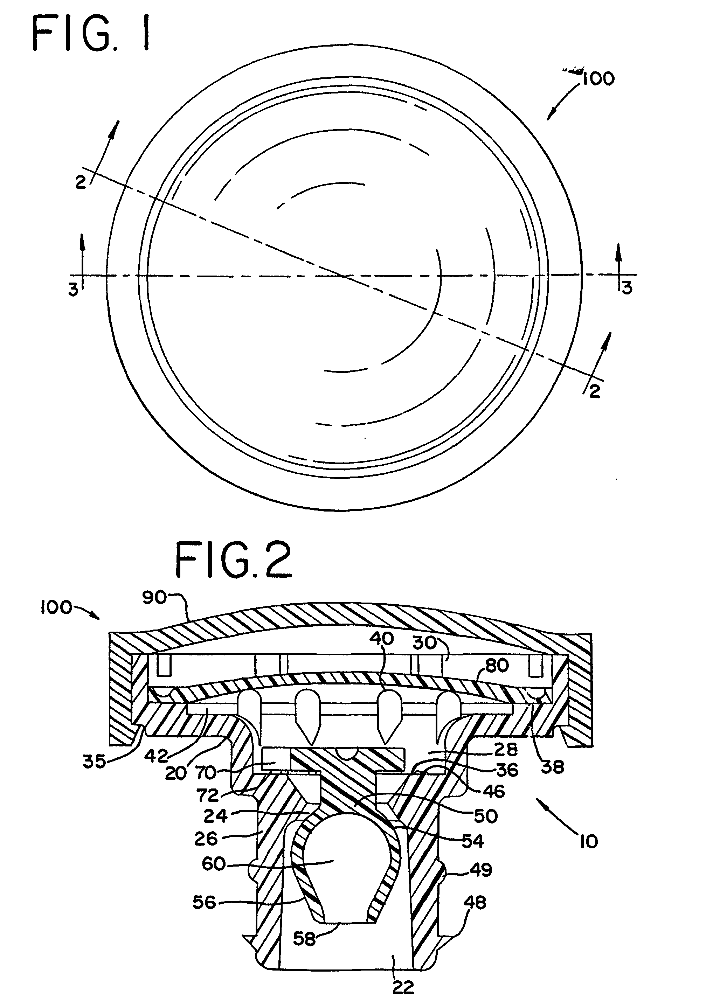

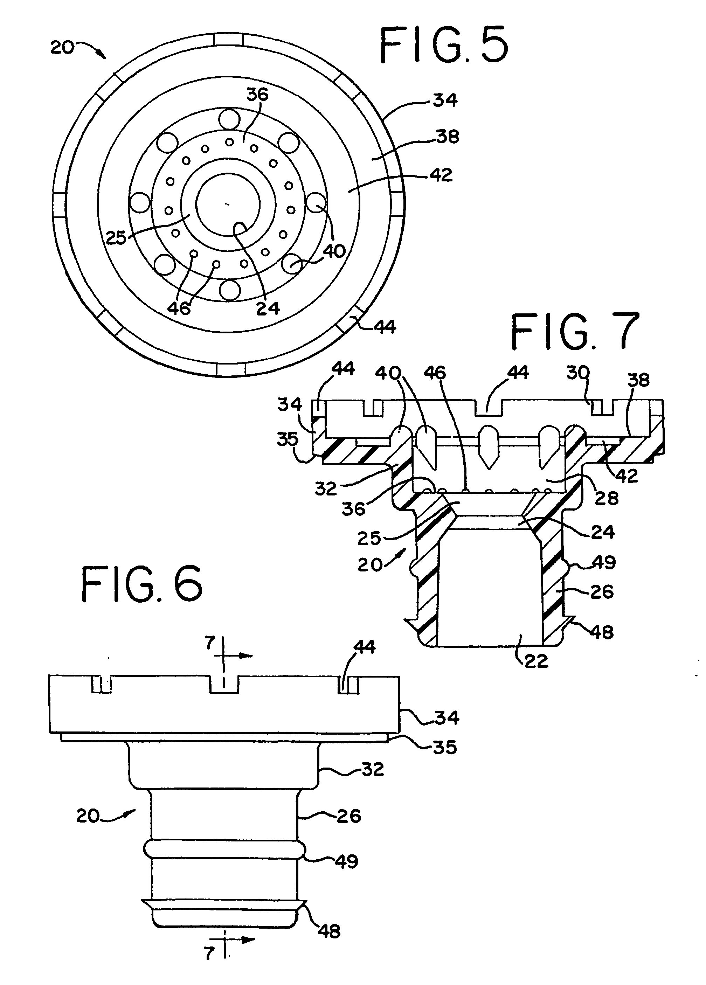

An embodiment of a check valve 10 and filter assembly 100 is shown in FIGs. 1 through 4. As shown in FIGs. 5 through 13, the check valve 10 and filter assembly 100 is constructed from housing member 20, bell shaped check valve member, filtration media 80, and cover 90.

With reference to FIGs. 2, and 5 through 7, the housing member 20 has an inlet 22 that communicates with a check valve seat 24, that in turn communicates with a chamber 28. Chamber 28 in turn communicates with outlet 30. Inlet 22 and valve seat 24 are defined by inlet wall 26, and inlet wall 26 transitions to chamber wall 32, that in turn transitions to outlet wall 34. Downstream of check valve seat 24 is retaining wall 36, and adjacent outlet wall 34 is filter affixation ledge 38.

In the embodiment of housing member 20 depicted in FIGs. 5 through 7, one or more projections 40 and groove 42 are optionally provided between filter affixation ledge 38 and chamber wall 32. Also, one or more outlet channels 44 are optionally provided in outlet wall 34. Further, one or more retaining projections 46 are optionally provided on retaining wall 36.

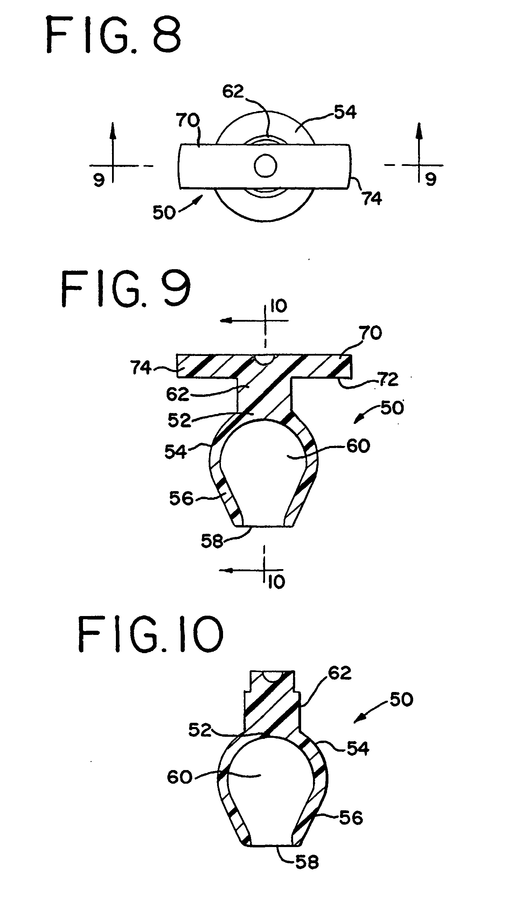

With reference to FIGs. 8 through 10, an embodiment of a bell shaped check valve member 50 is shown. Bell shaped check valve member 50 includes base 52 that transitions to a valve seat section 54 which is configured to conform to check valve seat 24 of housing 20. Valve seat section 54 in turn transitions to throat section 56 that terminates in throat entrance or mouth opening 58, and thereby defines chamber 60. Further, bell shaped check valve member 50 is provided with retaining member 70 that includes retaining surface 72.

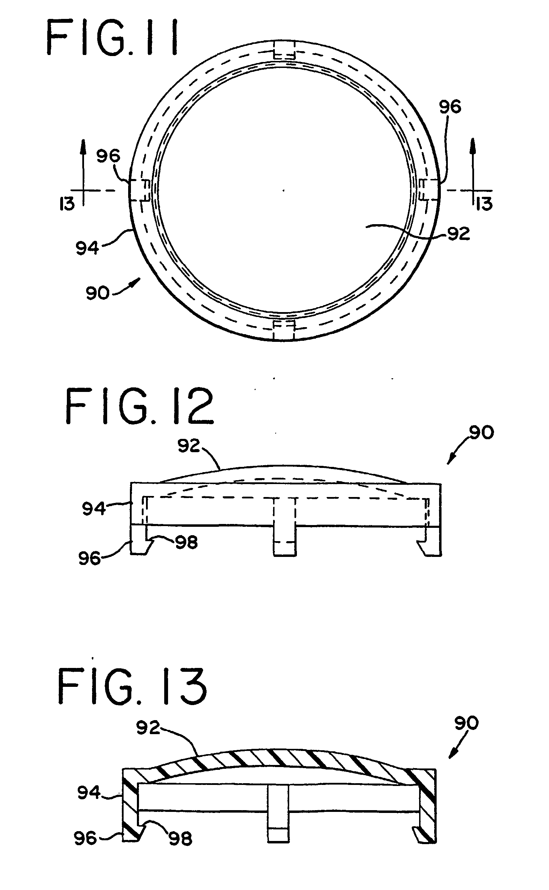

With reference to FIGs. 11 through 13, an embodiment of a cover member 90 is depicted. Cover member 90 includes top wall 92 and side wall 94. In the preferred embodiment of cover member 90, there is also provided one or more tabs 96 projecting from the interior of side wall 94 and extending outwardly from side wall 94. Further provided in the preferred embodiment of tabs 96 latches 98 that may snap lock into corresponding recess 35 in outlet wall 34 of housing member 20 when filter assembly 100 is fully assembled (see, e.g., FIG. 2).

Check valve 10 can be constructed by taking housing member 20 and inserting bell shaped check valve member 50 through inlet 22 and oriented such that retaining member 70 is the first portion to enter inlet 22. Inasmuch as the preferred material of construction for the bell shaped member 50 is a flexible synthetic resin, retaining member 70 deforms to permit the passage thereof beyond valve seat 24 and into chamber 28 during the insertion. An assembled check valve 10 is thereby created when the retaining member 70 fully clearing valve seat 24 and fully extending into chamber 28, and before valve seat section 54 of bell shaped member 50 fully abuts against valve seat 24 of housing 20.

Filter assembly 100 can be constructed by taking housing member 20 and affixing thereto filtration media 80, using a known method such as sonic welding. For example, in the preferred embodiment, filtration media 80 is sonically welded onto filter affixation ledge 38. Other mechanisms for affixing filtration media 80 to housing 20 known by those of ordinary skill in the art are also contemplated herein, including glue, hot glue, insert molding, hot melting, heat staking, and the like. The resulting affixation may be either a continuous or discontinuous affixation bead, although it is presently preferred to have a continuous bead affixation bead to assist with filtration efficiency. Either before or after the affixing of filtration media 80 to housing 20, check valve 10 may be constructed as noted directly above, to result in a filter assembly 100, although it is presently preferred that check valve 10 is assembled first followed by affixation of filtration media 80 to housing 20.

It is to be noted that the cover member 90 is an optional feature of the filter assembly 100. Nevertheless, it is presently preferred to add cover member 90, and to do so by pressing cover member 90 over housing outlet 30, following affixation of filtration media 80, such that latches 98 snap fit into recesses 35. Cover member embodiment 90 may be of assistance in fabricating the filter assembly in that it assists in maintaining the filter integrity during manufacture, handling, and installation. Further, in the preferred embodiment, top wall 92 and outlet channels 44 assist in providing a lower tendency of liquids to wick into the filtration material or other ambient materials, such as dust and like, to accumulate on the filtration material leading to a less than ideal filter assembly life. It should be noted that other mechanisms for retaining cover member 90 onto housing 20 are known by those of ordinary skill in the art are also contemplated herein, including glue, hot glue, insert molding, hot melting, heat staking, and the like.

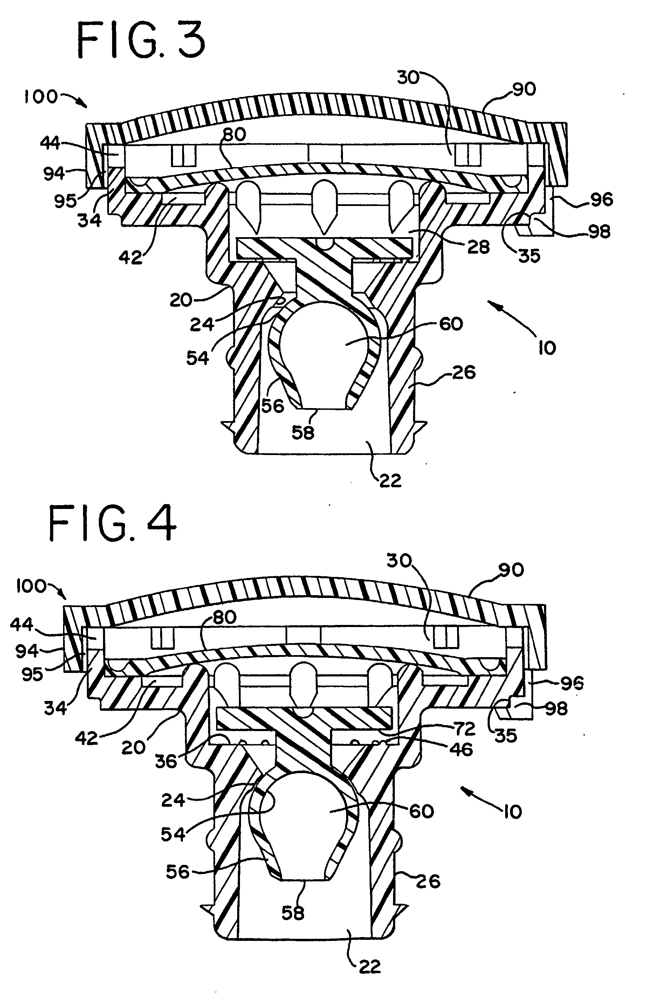

In use, check valve 10 is a normally open check valve (e.g., FIG. 3) permitting air or gas to pass from a downstream inlet, such as inlet 22 to an upstream outlet, such as outlet 30, and in a reverse direction as well. In this state, as depicted in FIG. 3, gas or air passes around valve seat section 54 of bell shaped check valve member 50 and valve seat 24, and around retaining member 70 in chamber 28. Typically, in this normally open state permitting air flow about the check valve member 50, at least a portion of retaining member 70 abuts against or is otherwise adjacent to retaining wall 36. When there is a liquid - gas, or water - air, interface that approaches and contacts bell shaped check valve member 50, the construction of the portion of the bell shaped check valve member 50 enveloped by the liquid is such that a buoyant and/or dynamic force is applied to move the valve member against a portion of the housing chamber until the member seats, that is where valve seat section 54 of check valve member 50 seals against seat 24 (e.g. FIG. 4). By this manner of operation, the check valve 10 prevents a liquid or water flow from the inlet 22 to the outlet 30. However, when the liquid - gas or water - air interface recedes from valve seat 24 (such as, for example when a water overflow condition is no longer present in a water cooler reservoir), there will eventually be created a pressure differential between the upstream side (the volume adjacent inlet 22) of the seated check valve and the downstream side (the volume adjacent chamber 28) to force the check valve assembly into its normally open state (e.g. FIG. 3).

In the preferred embodiment of bell shaped check valve member 50, chamber 60 and entrance or mouth opening 58 are configured such that chamber 60 captures and retains a gas when the check valve throat entrance or mouth opening 58 is exposed to a liquid - gas interface, and in particular chamber 60 may retain air when throat entrance or mouth opening 58 is exposed to an air - water interface. The resulting gas or air bubble in chamber 60 thereby assures the specific gravity of the structure thereafter extending into a liquid to be below one, and thereby providing a buoyancy and/or dynamic force exerted on the bell shaped check valve member to assure a satisfactory seat between valve seat section 54 of bell shaped check valve 50 and check valve seat 24 of housing member 20. However, as noted below, chamber 60 may be provided with other buoyant materials and/or mouth opening 58 may be modified to accomplish this operation.

Further, in the preferred embodiment retaining surface 72 of retaining member 70 bears against retaining wall 36 when the check valve is in its normally open state. Either or both of retaining surface 72 and retaining wall 36 may be textured such as is known in the art to prevent sticking of the retaining surface 72 to retaining wall 36 during operation. Additionally, and as presently preferred, retaining wall 36 is provided with retaining projections 46 that contact retaining surface 72 to prevent sticking. In addition, although retaining member 70 includes opposed lateral portions 74 in the preferred embodiment, one or more than 2 lateral portions, each of various angular orientations as can be readily appreciated by those of ordinary skill in the art are also contemplated herein to construct a retaining member 70 that can bear against a portion of a housing member to retain check valve member 50 within housing member 20.

Furthermore, and in the preferred embodiment, bell shaped check valve member 50 is also provided with stem 62 extending between base 52 and retaining member 70 and housing member 20 is also provided with transition wall section 25. These additional features are optional but provided in the preferred embodiment to enable the check valve member 50 to easily translate along the flow path traveling between the upstream end (adjacent inlet 22) and the downstream end (adjacent outlet 30) of the assembly as well as allow for some latitudinal displacement of the check valve member 50 relative to this flow path under normal operating conditions. With these preferred embodiment features it is believed that the check valve 10 may operate for its intended purpose from a vertical orientation (such as is depicted in FIG. 2) to and including at least a horizontal orientation (such as oriented at about 90 degrees from that depicted in FIG. 2).

Still further, and with reference to FIGs. 5 through 7, housing member 20 may be provided with various sealing means adjacent inlet 22, such as sealing flange 48. Other sealing means readily appreciated by those of ordinary skill in the art are also contemplated herein such as an interference fit sizing of inlet wall 26 exterior or interior, a threaded portion on the interior or exterior of inlet wall 26, an external or internal O-ring provided on inlet wall 26, or other such gasket sutrcture provided thereon, among other things. An optional boss 49, such as that provided on the preferred embodiment as shown in FIGs. 5 through 7, may also be provided to assist in proper positioning of the assembly inlet onto a vent that is normally used for gas or air but that permits the liquid - gas or water - air interface to be introduced into the check valve assembly 10.

As to the operation of filter assembly 100, this assembly incorporates check valve assembly 10, and consequently its operation parallels the foregoing discussion on the operation of the check valve assembly 10. Filtration media 80 in the preferred embodiment is an air filter that provides insubstantial impediment to ingress and egress of gas or air into chamber 28. In the preferred embodiment, projections 40 are provided in conjunction with groove 42 to maximize surface area for this gas or air flow. Furthermore, in the preferred embodiment, as depicted in FIGs. 3 and 4, air is permitted to flow from filtration media 80 into the head space between media 80 and cover 90 top wall 92. This flow continues over outlet wall 34 via outlet channels 44, and to outside the structure through gap 95 between side wall 94 and outlet wall 34, as provided by projecting tabs 96. Such a flow of gas or air would occur when the filter assembly 100 is connected to a liquid or water reservoir and the reservoir is filled with liquid or water that displaces the gas or air out of the head space of the reservoir. As noted above, check valve 10 incorporated therein operates to preserve the integrity of filtration media 80 if bell shaped check valve member 50 encounters a liquid - gas interface or water - gas interface, by sealing the valve seat section 54 to valve seat 24 due to buoyant and/or dynamic forces associated with the liquid or water.

The filter assembly 100 further permits a reverse flow of gas or air when the check valve assembly 10 is incorporated therein and is in, or returns to, a normally open position as described above. In such a state, air or gas is permitted to flow through gap 95 between side wall 94 and outer wall 34 and over outer wall 34 via outlet channels 44 and into the head space between top wall 92 and filtration media 80. This reverse flow passes through the filtration media 80, which filters the air or gas, and enters into chamber 28, and then passes over retaining member 70 and between check valve seat 24 and valve seat section 54 to thereby pass through inlet 22. In the preferred embodiment, such a reverse flow of gas or air would occur when the filter assembly 100 is connected to a liquid or water reservoir and the reservoir is emptied of liquid or water to thereby draw the gas or air into the head space of the reservoir. Due to the bell shaped check valve member, the filter assembly is less prone to restricting this reverse air flow due to the check valve sticking in the closed position, and thus water flow from a vented reservoir to which the preferred embodiment of the filter assembly is attached is improved over other known filter assemblies.

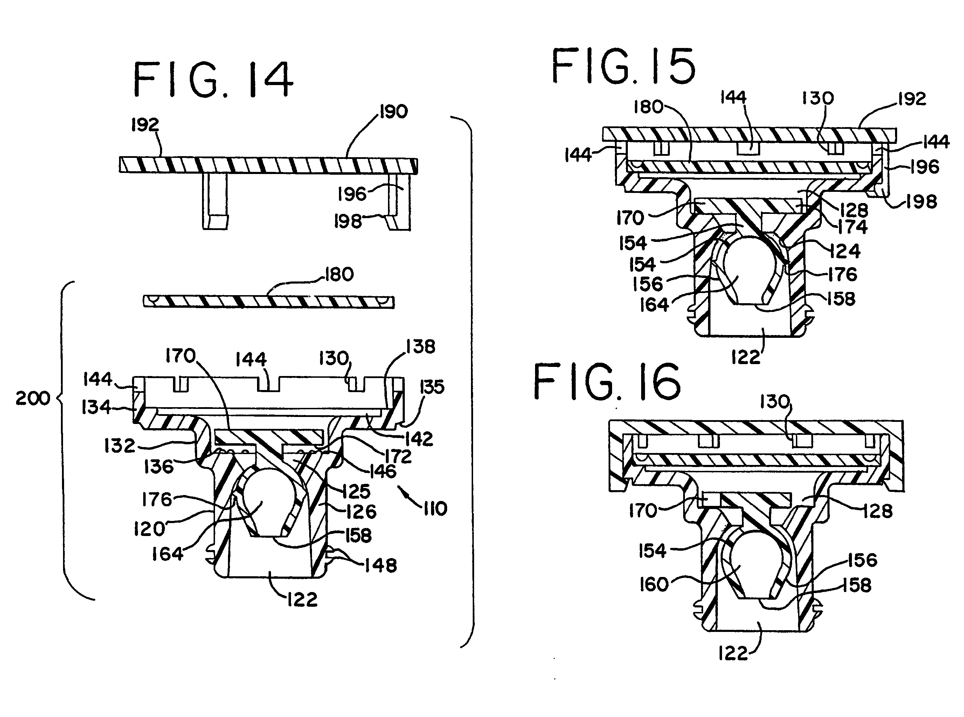

By way of further example, and with reference to FIGs. 14 through 16, a second alternative check valve assembly 110 and filter assembly 200 is shown in various cross-sections. This alternative embodiment is similar in structure and operation to the above described embodiments in the preceding figures, and accordingly these similar features have been denoted by numerical designations incremented by 100. Housing member 120 has similar features as that of housing member 20, but with slight design modifications. For example, valve seat 124 is a continuous curvature surface portion of inlet wall 126, and groove 142 transitions immediately into cavity 128. Further, sealing flange 148 is comprised of multiple ridges about inlet 122. Otherwise, the other features of housing member 120 are similar to those described herein with respect to FIGs. 1 through 13 and have thus been incremented by 100. This incrementing convention of feature designations has also been applied to filter media 180 and cover member 190 because their features are also similar to those described herein with respect to FIGs. 1 through 13.

As to the embodiment of check valve member 150 shown in FIGs. 14 through 16, this alternative is similar to the above described embodiment of check valve member 50, and accordingly these similar features have been denoted by numerical designations incremented by 100 with respect to the check valve member of FIGs. 2 through 4 and 8 through 10. In addition, disposed between throat section 156 and valve seat section 154 of this member are one or more discontinuous flanges 176, configured as either ball-like or rib-like structures. This additional feature of this embodiment, discontinuous flange 176, is of further benefit over that of the previously described embodiments in that the discontinuous flange 176 is believed to further assist bell shaped check valve member 150 from sticking in the closed position during operation as described above and prevents this member from traveling an excessive distance into chamber 128 due to excessive pressures exerted by liquids entering from inlet 122. Still further, it is believed that discontinuous flange 176 acts as a guide and assists the bell shaped check valve member to properly position itself before actuation so that the valve seat section 154 is located adjacent to valve seat 124, and thereby promote a favorable sealing therebetween during valve actuation. Thus, it is believed that discontinuous flange 176 further assists check valve assembly 110 effectiveness in vertical through and including horizontal orientations.

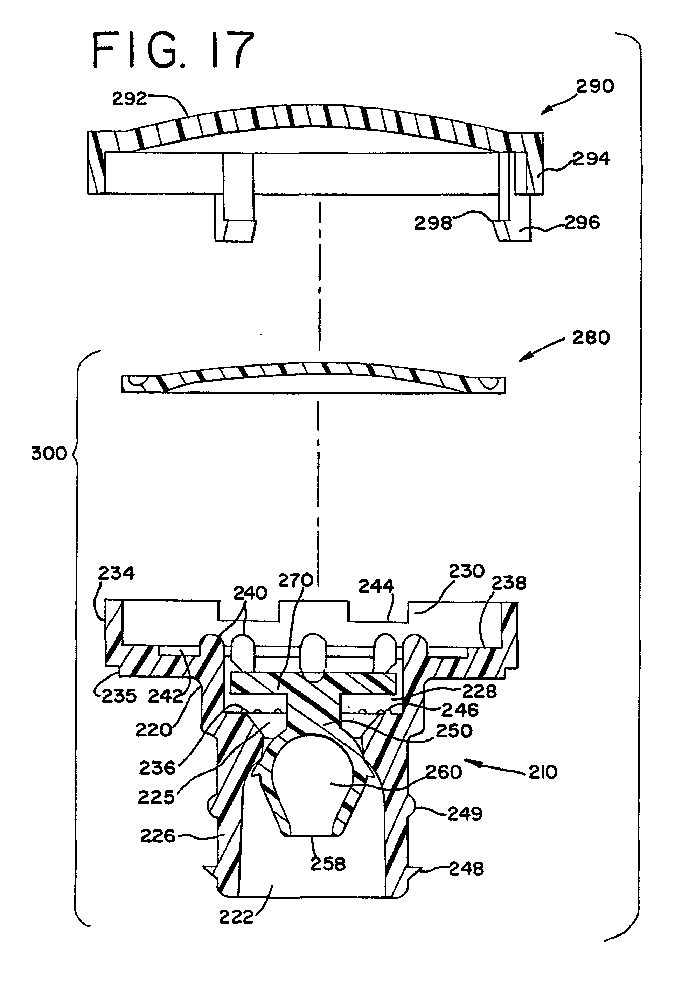

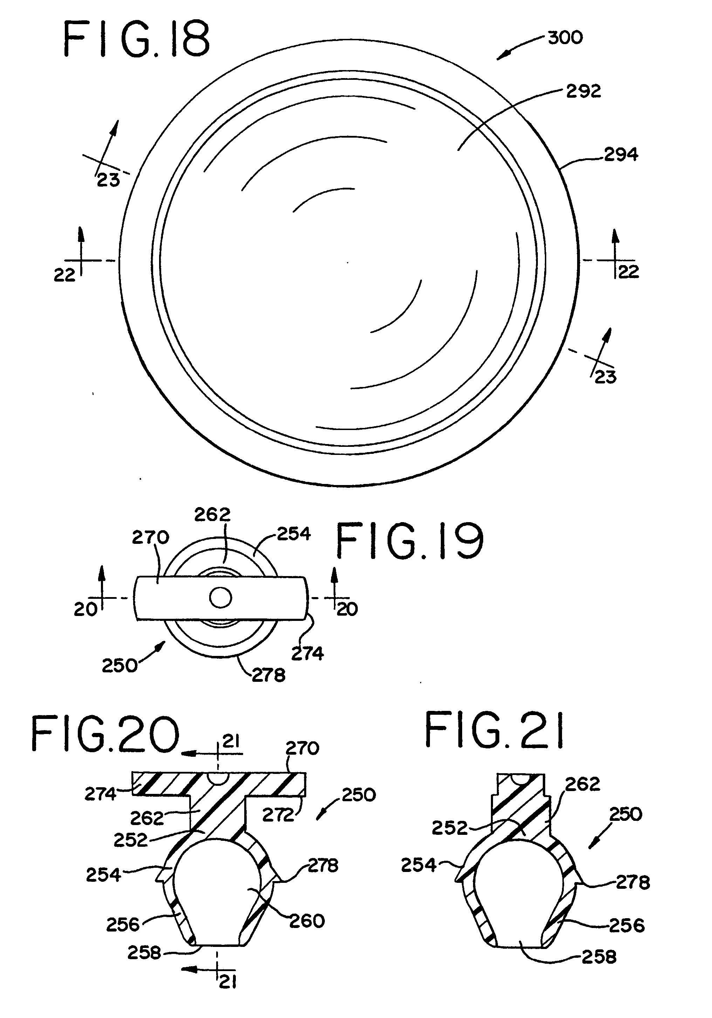

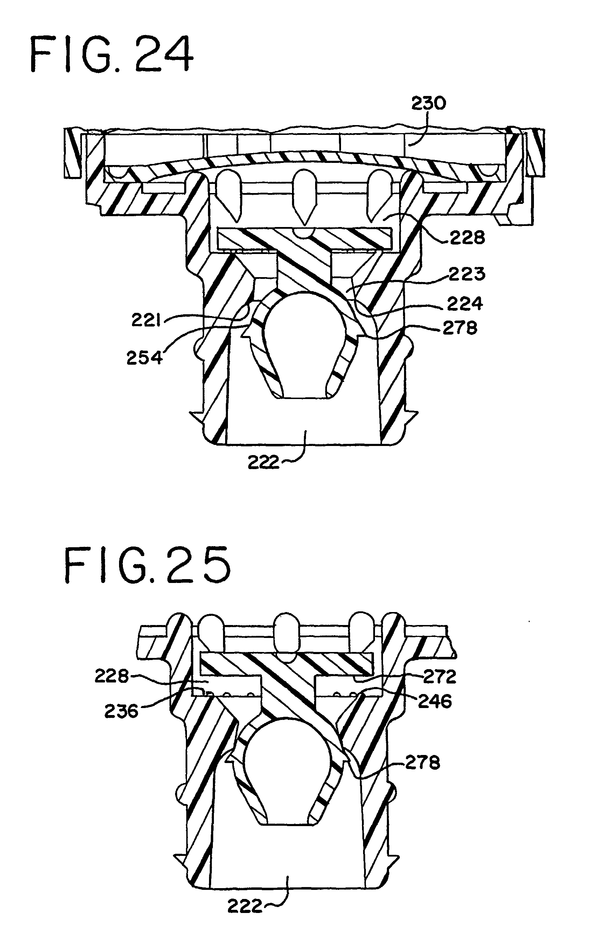

Further, and with reference to FIGs. 17 through 25, a third alternative and presently preferred embodiment of check valve assembly 210 and filter assembly 300 is shown. As is readily noted from these figures, many of the features of housing or body member 220 are similar to the features of housing member 20 (see, e.g., FIGs. 5 through 7) and housing member or body member 120 (see FIGs. 14 through 16) and accordingly these similar features have been denoted by numerical designations incremented by 200 with respect to housing member 20 and by 100 with respect to body member 120. Of further note with respect to this preferred embodiment is that inlet 222 has a slightly greater diameter than that of the above embodiments and valve seat 224 includes a continuous curvature surface portion of inlet wall 226 (denoted 221, e.g. FIG. 24) and the intermediate wall section 223 and transition or joint therebetween.

With reference to FIGs. 19 through 25, a third alternative and presently preferred embodiment of bell shaped check valve member 250 is shown. As is readily noted from these figures, many of the features of this embodiment are similar to the features of the embodiment of member 50 (see, e.g., FIGs. 3, 4, and 8 through 10) and member 150 (see FIGs. 14 through 16) and accordingly these similar features have been denoted by numerical designations incremented by 200 with respect to member 50 and by 100 with respect to body member 150. Of further note with respect to this preferred embodiment is that disposed between throat section 256 and valve seat section 254 of this member 250 is continuous flange 278. As can be appreciated with specific reference to FIGs. 24 and 25, continuous flange 278 has the further advantageous attribute of providing a secondary valve seat section in addition to the primary valve seat section 254. This additional feature is believed to provide the check valve assembly 210 with further robustness when a higher than normal pressure differential is experienced. Under such circumstances, such as in the preferred embodiment when there is a greater than 6,89476 Pa (1 p.s.i.g.) pressure differential is presented from a liquid or water reservoir overfill condition in a water cooler by way of inlet 222, bell shaped check valve member 250 may travel further upstream, and thus a seal can be established between continuous flange 278 and check valve seat 224, which may include both intermediate wall section 223 and continuous curvature surface portion 221 (see, e.g., FIG. 24). Thus it is believed that continuous flange 278 may operate as a secondary valve seat for high pressure and other unusual operating conditions. Additionally, as similarly noted above with respect to discontinuous flange 176, it is believed that continuous flange 278 operates as a stop mechanism to prevent bell shaped check valve member 250 from sticking into a normally closed position during operation, and acts as a guide for the member 250 during operation so that the check valve assembly may operate in a range of orientations or positions, through and including between a vertical position and a horizontal position. For these and other advantageous reasons readily appreciated by those of ordinary skill in the art, bell shaped check valve member 250 with continuous flange 278 is presently preferred.

As for the operation of the embodiment of check valve assembly 210, it generally conforms to that described above with respect to the embodiments of FIGs. 1 through 13. Similarly, as to the operation of the embodiment of filter assembly 300, it generally conforms to that described above with respect to the embodiments of FIGs. 1 through 13. Accordingly the construction and operation of the embodiments of assemblies 210 and 300 will not be repeated herein. It is to be noted, however, that these assemblies 210 and 310 have further advantageous features, as noted immediately hereinabove.

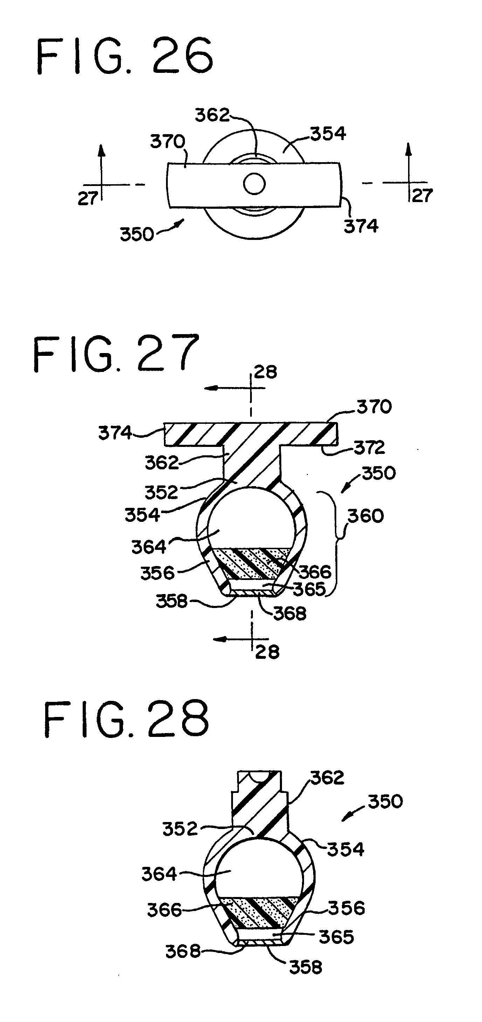

It is to be further noted that all of the bell shaped check valve member embodiments disclosed herein may optionally have chambers 60, 160, 260 partially or completely filled with a foamed synthetic resin, such as foamed polystyrene, foamed polyethylene, foamed urethane or other such foamed synthetic resin materials well known in the art to make the member structure that is wetted by liquid or water have a specific gravity of less than one and thereby facilitate the applicable buoyant and/or dynamic forces to seal the check valve member against the housing or body member. Alternatively, or in combination with the foamed synthetic resin material in the chambers 60, 160, 260, a thin synthetic resin member may be placed over the throat entrances 58, 158, 258 of the bell shaped check valve member embodiments. This thin member may be of a cap over the mouth entrance and/or plug in the mouth entrance, and may be of any synthetic resin suitable for the fluid and operating temperature of the check valve assembly, such as silicone, nylon, polyethylene or polyester. By way of example only, and as shown in FIGs. 26 through 28, there is provided within cavity 360 foamaceous synthetic resin 366, which also retains an air bubble 64 within cavity 360. Further, and by way of example only, as shown in FIGs. 26 through 28, there is provided thin synthetic resin member 368 over mouth entrance 358, which also retains an air bubble 365. It is to be appreciated that the size of the air bubble retained by the thin synthetic resin member may be as large as cavity 360, less the volume that may be occupied by the thin synthetic resin member 368, when a bell shaped check valve assembly is constructed without foamaceous material is not located within cavity 360. As is the convention herein, other features of the previously discussed check valve embodiments that are similar to those features of the embodiment of FIGs. 26 through 28 are denoted by the same last two digits, and incremented by 100 or multiples thereof for the sake of brevity of description.

The bell shaped check valve member embodiments 50, 150, 250, 350 disclosed herein may be constructed of any suitable synthetic resin material, and the preferred embodiment is preferably a flexible synthetic resin to allow for deformation of the member for proper sealing against the check valve seat 24, 124, 224 of a housing member or body member that defines the chamber for operation of the check valve assembly, as well as proper unsealing when a low pressure differential (such as 249 to 498 Pa [one to two inches of water column]) is experienced on either side of the sealing surface 24, 124, 224 of the valve. For example, bell shaped check valve members 50, 150,250, 350 may be composed of nylon or silicone or polyethylene suitable for the fluid and operating temperature of the check valve assembly or filter assembly incorporating same. In the preferred embodiment of the check valve member 250, for example, the member is preferably constructed of a silicone, and preferably a low durometer liquid silicone (e.g. 30 to 50 Shore A), and valve seat section 254 is preferably a surface free of flash, sinks, parting lines, and flow lines. The above noted synthetic resin materials are illustrative and other suitable materials well known in the art can be used.

The retaining members 70, 170, 270, 370 disclosed herein may be constructed of any suitable material, including synthetic resin materials such as nylon, polyester or silicone, or metal, such as stainless steel, brass, or steel, and the preferred embodiment is preferably composed of silicone and monolithic with the bell shaped check valve member. However, the retaining members 70, 170, 270 may be affixed to the base 52, 152, 252, 352 of the bell shaped check valve member by mechanisms readily appreciated by those of skill in the art, such as by glue, hot glue, insert molding, hot melting, heat staking, and the like. Further, a stem, such as 62, 162, 262, 362 between the retaining member and the bell shaped check valve member base may optionally be similarly affixed between the base and the retaining member, although it is presently preferred to include a stem with the bell shaped check valve member and make it monolithic to the valve member and retaining member and of the same material. The presently preferred embodiment of the bell shaped check valve member 250 is made by injection molding techniques known to those of ordinary skill in the art.

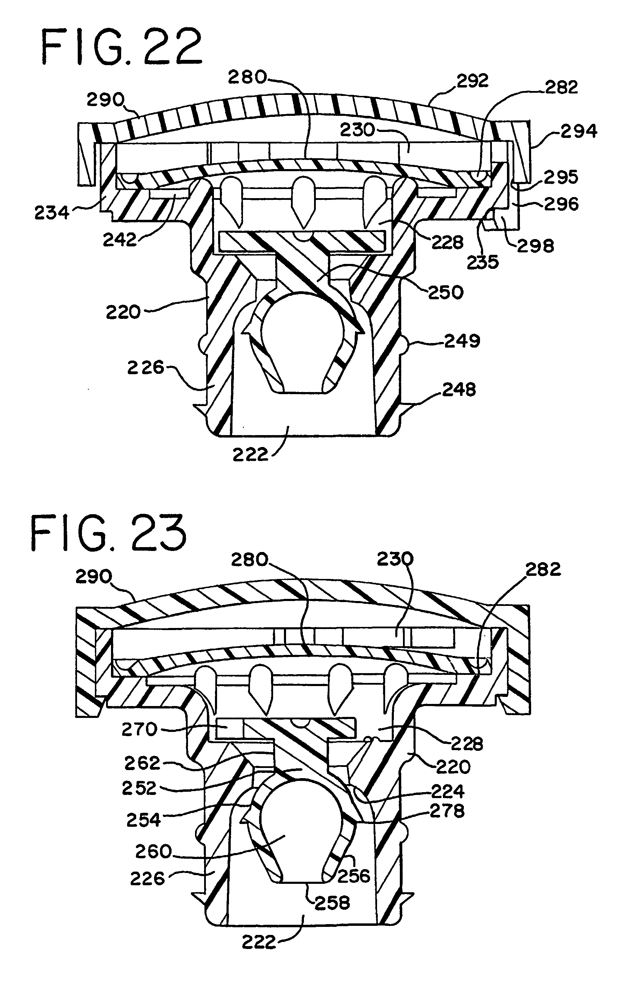

The housing member or body member embodiments 20, 120, 220, as well as the cover members 90, 190, 290, may be constructed of any suitable material depending upon the application, including synthetic resin, such as nylon, polyester, polyethylene, polypropylene, or metal, such as steel, brass, copper, stainless steel, and the preferred embodiments are preferably of a plastic such as polypropylene. Similarly, the filtration media 80, 180, 280 may be of screen, depth media, membrane woven or non-woven or other construction suitable for the application of filtering air and be composed of cellulose, polypropylene, nylon, or polyester, paper, metal, and/or a combination of the foregoing in serial filtration. Indeed, the filtration media may be of any synthetic resin material suitable for the gas or air and operating temperature of the filter assembly incorporating same. The preferred embodiment of the filtration media 280 is preferably of a felt polypropylene construction, and is sonically welded onto housing member or body member 220 as is evident from weld seam 282 circumscribing chamber 228 and groove 242 (see, e.g., FIG. 22).

As can be readily appreciated, it is believed that the embodiments described herein have the advantageous properties of providing a check valve for a liquid - gas interface, that is normally open to permit gas passage but will close to substantially stop the flow of liquid in one direction and will reliably open to allow gas to flow in the other direction upon experiencing a low vacuum pressure differential across the valve structure, such as from the reservoir of a water cooler, that may be of less than 498 Pa (two inches of water column). Accordingly, an embodiment of the invention may be utilized to be incorporated into a filter assembly, and preferably an air filter assembly, to protect the filter from excessive water flow therethrough.. The resultant check valve assembly and filter assembly has consequent time, cost and other manufacturing efficiencies that heretofore have not been discovered until the invention herein.

A preferred embodiment will hereafter be dimensionally described for purposes of illustration and description only and should not be utilized to limit the scope of the invention herein. For purposes of further description of the preferred embodiment of the check valve assembly (e.g., Fig. 22) includes bell shaped check valve member 250 of a height of about 0,82 cm (0.321 inches) (measuring from the top of retaining member 270 to the bottom of mouth entrance 258). The mouth entrance or mouth opening 258 is about 0,21 cm (0.082 inch) diameter, and the thickness of the bell shaped member that defines cavity 260 is about 0,05 cm (0.020 inch). Throat section 256 transitions from the mouth entrance or mouth opening 258 at about a 25 degree angle from vertical. The wall portion from the base 252 transitioning to about the valve seat section 254 is generally spherical with a diameter of about 0,6 cm (0.200 inch) exterior diameter. Continuous flange 278 has an exterior diameter of about 0,58 cm (0.230 inch), and a vertical height of about 0,06 cm (0.025 inch). Stem 262 is about 0,19 cm (0.073 inch) in height, and about 0,25 cm (0.100 inch) in diameter. Retaining member 270 is about 0,82 cm (0.320 inch) long as it spans across chamber 228, and is about 0,1 cm (0.040 inch) thick, and about 0,2 cm (0.080 inch) wide. Further, inlet 222 has a diameter of about 0,74 cm (0.290 inch) the exterior of inlet wall 226 has a diameter of about 0,94 cm (0.370 inch), and housing 20, 120, 220 has a height of about 1,47 cm (0.58 inch). Outlet wall 34, 134, 234 has a height of about 0,43 cm (0.17 inch) and an exterior of about 2,24 cm (0.88 inch) diameter, and an interior of about 1,88 cm (0.74 inch) diameter, and chamber wall 32, 132, 232 has an interior with a diameter of about 0,89 cm (0.35 inch). Cover member 90, 190, 290 has an exterior with a diameter of about 2,24 cm (0.88 inch), side wall 94, 194, 294 inner diameter of about 2,03 cm (0.80 inch) and height of about 0,53 cm (0.21 inch). Notably, it is believed that the silicone composition and above dimension of the mouth entrance or mouth opening 258 in conjunction with the configuration of cavity 260, including its diameter of about 0,41 cm (0.160 inch), enables the preferred embodiment of the check valve member to capture and retain an air bubble when the mouth entrance or mouth opening 258 contacts a liquid or water and thereby provides the disclosed check valve assembly and filter assembly incorporating same with a properly functioning check valve for the present application for which the assemblies are intended, including orienting the check valve and filter assembly longitudinal axis from a vertical orientation (e.g. Fig. 2) to a horizontal orientation (about 90 degrees from that of Fig. 2), and therebetween. It will be appreciated that the above dimensions may be altered and modified as a part of a different design and yet not depart from the invention disclosed and claimed herein.

It will be appreciated that alternatives to the preferred embodiments disclosed herein may be appreciated by those of ordinary skill in the art that will fall within the scope of this invention as hereafter claimed. The disclosed and claimed check valve assemblies and filter assemblies have numerous advantages. The disclosed filter assemblies and check valve assemblies involves relatively simple manufacturing methods and apparatuses, yet provides a satisfactory resulting check valve and filter assembly incorporating same with suitable filtration rating, dirt holding capacity, and check valve closure for the intended application, among others. The disclosed check valve and filter assembly incorporating same is economical and results in an efficiently produced filter assembly and/or check valve suitably configured for its intended application.

While the preferred embodiments of the aspects of the invention have been disclosed, it is to be understood that the invention is not limited to the disclosed examples or their disclosed use. Modifications of design in addition to those discussed can be made without departing from the invention as hereafter claimed. For example, the housing inlet and outlet, housing chamber, recess, groove, intermediate wall section and transition wall section may have other than circular or cylindrical configurations, such as rectangular or other polygonal prism geometries and yet nevertheless not depart from the invention herein. Further, the outlet channels may be oriented on not only the outlet wall of the housing, but also through the cover in line with the housing outlet channels or displaced thereto, or there may be outlet channels in the cover member and not in the housing. The scope of the invention is accordingly indicated in the appended claims. Thus, while the invention has been described with reference to particular embodiments, modification of structure, materials and the like will be apparent to those skilled in the art, yet still fall within the scope of the invention as hereafter claimed.

### LIST OF REFERENCE NUMERALS

- 10, 110, 210 =: check valve
- 20, 120, 220 =: housing member
- 22, 122, 222 =: inlet = upstream opening
- 24, 124, 224 =: check valve = seating surface
- 25, 125, 225 =: transition wall section
- 26, 126, 226 =: inlet wall
- 28, 128, 228 =: downstream chamber
- 30, 130, 230 =: outlet of 28 = downstream opening
- 32, 132 =: chamber wall
- 34, 134, 234 =: outlet wall
- 35, 135, 235: recess in 34, etc.
- 38, 138, 238: filter affixation ledge
- 40 =: projection
- 42, 142, 242 =: groove
- 44, 144 =: outlet channel
- 46, 146, 246 =: retaining projection
- 49, 249 =: boss
- 50, 150, 250, 350 =: check valve member
- 52, 152, 252, 352 =: base of 50 etc.
- 54, 154, 254, 354 =: valve seat section
- 56, 156, 256, 356 =: throat section
- 58, 158, 258, 358 =: mouth opening
- 60, 160, 260, 360 =: chamber
- 70, 170, 270, 370 =: retaining member
- 72, 172, 272, 372 =: surface of 70, etc.
- 74, 174, 274, 374 =: lateral portion of 70, etc.
- 80, 180, 280 =: filtration media
- 90, 190, 290 =: cover member
- 92, 192, 292 =: top wall
- 94, 294 =: side wall
- 96, 196, 296 =: tab
- 98, 198, 298 =: latch
- 100, 200, 300 =: filter assembly
- 148, 248 =: sealing flange
- 176 =: flange member
- 278 =: flange member
- 366 =: synthetic resin material
- 368 =: thin walled member

## Claims

1. A normally open check valve (10, 110, 210) for passing gas in a first direction, from an upstream side of the valve (10, 110, 210) to a downstream side of the valve (10, 110, 210), and for passing gas in a reverse direction to the first direction, and for preventing liquid flow in the first direction, comprising a housing member (20, 120, 220) having a chamber (28, 128, 228) with at least one side wall (26, 126, 226; 32, 132), an upstream opening (22, 122, 222) and a downstream opening (30, 130, 230), the side wall (26, 126, 226; 32, 132) including a tubular side wall portion having a diameter narrowing to at least a seating surface (24, 124, 224) as the side wall (26, 126, 226; 32, 132) of the chamber (28, 128, 228) extends upstream, **characterized in that** a bell shaped member (50, 150, 250, 350) is provided with a portion of the member (50, 150, 250, 350) received within the tubular chamber and having a mouth (58, 158, 258, 358), a closed base (52, 152, 252, 352) and a flexible wall extending between the mouth (58, 158, 258, 358) and the base (52, 152, 252, 352) that includes an annular portion (54, 154, 254, 354) of a diameter greater than that of the seating surface (24, 124, 224) of the side wall (26, 126, 226; 32, 132) of the chamber (28, 128, 228) and greater than the perimeter of the mouth (58, 158, 258, 358), wherein the specific gravity of the bell shaped member (50, 150, 250, 350) volume as defined by the opening of the mouth (58, 158, 258, 358), the base (52, 152, 252, 352) and the wall therebetween is less than one, that the mouth (58, 158, 258, 358) is disposed within the tubular chamber portion facing upstream and the base (52, 152, 252, 352) is generally downstream of the mouth (58, 158, 258, 358) and, **in that** a retaining member (70, 170, 270, 370) is affixed to the base (52, 152, 252, 352) of the bell shaped member (50, 150, 250, 350) and is adapted to engage the side wall (32, 132) of the chamber (28, 128, 228) downstream of the seating surface (24, 124, 224), whereby the retaining member (70, 170, 270, 370) arrests movement of the bell-shaped member (50, 150, 250, 350) when gas flows in the direction reverse of the first direction past the bell shaped member (50, 150, 250, 350), and when liquid flows upstream of the bell shaped member (50, 150, 250, 350), the wall of the bell shaped member (50, 150, 250, 350) peripherally contacts the seating surface (24, 124, 224) of the chamber (28, 128, 228) to thereby stop the flow of liquid upstream of the bell-shaped member (50, 150, 250, 350).

2. The check valve according to claim 1, **characterized in that** the mouth (58, 158, 258, 358) is having an inner diameter less than the exterior diameter of the annular portion (54, 154, 254, 354) and the bell shaped member is consisting of a flexible synthetic resin and, **in that** the retaining member (70, 170, 270, 370) is consisting of a synthetic resin and is having a portion (74, 174, 274, 384) extending laterally to the downstream direction adapted to engage the side wall (32, 132) of the chamber (28, 128, 228) downstream of the seating surface (24, 124, 224).

3. The check valve according to claim 2, **characterized in that** the valve (10, 110, 210) is forming a part of an air filter assembly (100, 200, 300), that the chamber (28, 128, 228) is provided in a housing (20, 120, 220) with the chamber (28, 128, 228) having an inlet (22, 122, 222) and an outlet (30, 130, 230) as the upstream and downstream openings (22, 122, 222; 30, 130, 230), respectively, that a filtration medium (80, 180, 280) is affixed over the outlet (30, 130, 230) of the chamber (28, 128, 228), that the bell shaped member (50, 150, 250, 350) is disposed in the chamber with the mouth (58, 158, 258, 358) toward the inlet (22, 122, 222) and the base (52, 152, 252, 352) facing toward the outlet (30, 130, 230) and, **in that** the retaining member (70, 170, 270, 370) is extending generally toward the outlet (30, 130, 230) and further is including a portion extending over the outlet (30, 130, 230) and adapted to engage a portion of the housing (20, 120, 220), whereby the retaining member (70, 170, 270, 370) arrests movement of the bell shaped member (50, 150, 250, 350) toward the inlet (22, 122, 222) of the chamber (28, 128, 228) when air flows through the filtration medium (80, 180, 280) toward the inlet (22, 122, 222), and the bell shaped member (50, 150, 250, 350) wall peripherally contacts the seating surface (24, 124, 224) of the chamber (28, 128, 228) at an initial seating wall portion to thereby stop the flow of liquid when liquid flows from the inlet (22, 122, 222) past the seating surface (24, 124, 224), to thereby provide a normally open check valve (10, 110, 210) passing gas between the inlet (22, 122, 222) and the outlet (30, 130, 230), and preventing liquid flow through the filtration media (80, 180, 280).

4. The check valve according to any of the claims 1 to 3, **characterized in that** the bell shaped member (50, 150, 250, 350) and the retaining member (70, 170, 270, 370) comprise a silicon material.

5. The check valve according to any of the preceding claims, **characterized in that** the bell shaped member (50, 150, 250, 350) and the retaining member (70, 170, 270, 370) are monolithic.

6. The check valve according to any of the preceding claims, **characterized in that** the retaining member (70, 170, 270, 370) includes a lateral member (74, 174, 274, 374) disposed across the opening of the chamber (28, 128, 228).

7. The check valve according to any of the preceding claims, **characterized in that** a flange member (176) is provided on the bell shaped member (150) exterior between the mouth (158) and the seating surface (154), wherein the flange (176) outboard diameter is greater than the diameter of the seating surface (124).

8. The check valve according to claim 7, **characterized in that** the flange (176) is discontinuous about the bell shaped member (150) exterior.

9. The check valve according to claim 7, **characterized in that** the flange (278) is continuous about the bell shaped member (250) exterior.

10. The check valve according to claims 8 or 9, **characterized in that** the bell shaped member (150, 250), retaining member (170, 270), and flange (176, 278) are monolithic and comprise a flexible synthetic resin material, especially a silicon material.

11. The check valve according to any of the preceding claims, **characterized in that** the bell shaped member (50, 150, 250) interior (60, 160, 260, 360) comprises gas when the mouth (58, 158, 258, 358) of the bell shaped member (50, 150, 250) contacts liquid.

12. The check valve according to any of the preceding claims, **characterized in that** the chamber (360) in the bell shaped member (350) comprises a foamed synthetic resin material (366).

13. The check valve according to any of the preceding claims 3 to 12, **characterized in that** a synthetic resin cover member (90, 190, 290) is retained upon the housing (20, 120, 220) and is extending over the filtration medium (80, 180, 280).

14. The check valve according to any of the preceding claims, **characterized in that** the mouth (358) of the bell shaped member (350) is covered by a thin walled member (368) to enclose gas within the bell shaped member (350).

## Patentansprüche

1. Normalerweise offenes Rückschlagventil (10, 110, 210) zum Durchlass eines Gases in einer ersten Richtung von einer stromaufwärts liegenden Seite des Ventils (10, 110, 210) zu einer stromabwärts Seite des Ventils (10, 110, 210) und zum Durchlass eines Gases in entgegengesetzter Richtung zur ersten Richtung und zum Verhindern einer Flüssigkeitsströmung in der ersten Richtung umfassend ein Gehäuseteil (20, 120, 220), welches eine Kammer (28, 128, 228) mit mindestens einer Seitenwandung (26, 126, 226, 32, 132), eine stromaufwärts Öffnung (22, 122, 222) und eine stromabwärts Öffnung (30, 130, 230) aufweist, wobei die Seitenwandung (26, 126, 226, 32, 132) einen rohrförmigen Seitenwandungsabschnitt enthält, welcher einen Durchmesser aufweist, der sich zu mindestens einer Sitzfläche (24, 124, 224) verengt, während sich die Seitenwandung (26, 126, 226, 32, 132) der Kammer (28, 128, 228) stromaufwärts erstreckt, **dadurch gekennzeichnet, dass** ein glockenförmiger Teil (50, 150, 250, 350) vorgesehen ist, wobei ein Abschnitt des Teils (50, 150, 250, 350) in der rohrförmigen Kammer aufgenommen ist, und eine Mündung (58, 158, 258, 358), eine geschlossene Basis (52, 152, 252, 352) und eine flexible Wandung aufweist, welche sich zwischen der Mündung (58, 158, 258 ,358) und der Basis (52, 152, 252, 352) erstreckt und einen ringförmigen Abschnitt 54, 154, 254, 354) einschließt, der einen Durchmesser größer als der der Sitzfläche (24, 124, 224) der Seitenwandung (26, 126, 226, 32, 132) der Kammer (28, 128, 228) und größer als der Umfang der Mündung (58, 158, 258, 358) aufweist, wobei das spezifische Gewicht des Volumens des glockenförmigen Teils (50, 150, 250, 350), wie es durch die Öffnung der Mündung (58, 158, 258, 358), die Basis (52, 152, 252, 352) und die Wandung zwischen diesen definiert ist, kleiner als 1 ist, dass die Mündung (58, 158, 258, 358) stromaufwärts weisend in dem rohrförmigen Kammerabschnitt angeordnet ist und die Basis (52, 152, 252, 352) allgemein stromabwärts der Mündung (58, 158, 258, 358) liegt, und dass ein Halteteil (70, 170, 270, 370) an der Basis (52, 152, 252, 352) des glockenförmigen Teils 850, 150, 250, 350) befestigt und geeignet ist, in Eingriff mit der Seitenwandung (32, 132) der Kammer (28, 128, 228) stromabwärts der Sitzfläche (24, 124, 224) zu gelangen, wodurch der Halteteil (70, 170, 270, 370) die Bewegung des glockenförmigen Teils (50, 150, 250, 350) anhält, wenn Gas in einer Richtung entgegengesetzt zu ersten Richtung an dem glockenförmigen Teil (50, 150, 250, 350) vorbeiströmt und wenn Flüssigkeit stromaufwärts des glockenförmigen Teils (50, 150, 250, 350) fließt, wobei die Wandung des glockenförmigen Teils (50, 150, 250, 350) am Umfang in Berührung mit der Sitzfläche (24, 124, 224) der Kammer (28, 128, 228) gelangt, um **dadurch** den Flüssigkeitsstrom stromabwärts des glockenförmigen Teils (50, 150, 250, 350) zu beenden.

2. Rückschlagventil nach Anspruch 1, **dadurch gekennzeichnet, dass** die Mündung (58, 158, 258, 358) einen Durchmesser aufweist, der kleiner ist als der Außendurchmesser des ringförmigen Abschnittes (54, 154, 254, 354) und der glockenförmige Teil aus einem flexiblen Kunstharz besteht und dass der Halteteil (70, 170, 270, 370) aus einem Kunstharz besteht und einen Abschnitt (74, 174, 274, 384) aufweist, welcher sich quer zur stromabwärts Richtung erstreckt und geeignet ist, in Eingriff mit der Seitenwandung (32, 132) der Kammer (28, 128, 228) stromabwärts der Sitzfläche (24, 124, 224) zu gelangen.

3. Rückschlagventil nach Anspruch 2, **dadurch gekennzeichnet, dass** das Ventil (10, 110, 210) Teil einer Luftfilteranordnung (100, 200, 300) bildet, dass die Kammer 828, 128, 228) in einem Gehäuse (20, 120, 220) vorgesehen ist, wobei die Kammer (28, 128, 228) einen Einlass (22, 122, 222) und einen Auslass (30, 130, 230) als die stromaufwärts Öffnung beziehungsweise stromabwärts Öffnung (22, 122, 222; 30, 130, 230) aufweist, dass ein Filtermedium (80, 180, 280) über dem Auslass (30, 130, 230) der Kammer (828, 128, 228) befestigt ist, dass der glockenförmige Teil (50, 150, 250, 350) in der Kammer mit der Mündung (58, 158, 258, 358) in Richtung des Einlasses (22, 122, 222) und die Basis (52, 152, 252, 352) in Richtung des Auslasses (30, 130, 230) weisend angeordnet ist, und dass der Halteteil (70, 170, 270, 370) sich allgemein in Richtung des Auslasses (30, 130, 230) erstreckt und ferner einen Abschnitt enthält, der sich über den Auslass (30, 130, 230) erstreckt und geeignet ist, mit einem Abschnitt des Gehäuses (20, 120, 220) im Eingriff zu gelangen, wodurch der Halteteil (70, 170, 270, 3709 eine Bewegung des glockenförmigen Teils (50, 150, 250, 350) in Richtung des Einlasses (22, 122, 222) der Kammer (28, 128, 228) anhält, wenn Luft durch das Filtermedium (80, 180, 280) in Richtung des Einlasses (22, 122, 222) strömt, wobei der glockenförmige Teil (50, 150, 250, 350) mit seiner Wandung am Umfang in Berührung mit der Sitzfläche (24, 124, 224) der Kammer (28, 128, 228) an einem anfänglichem Wandungssitzabschnitt gelangt, um **dadurch** die Strömung von Flüssigkeit zu beenden, wenn Flüssigkeit vom Einlass (22, 122, 222) an der Sitzfläche (24, 124, 224) vorbei strömt, um **dadurch** ein normalerweise offenes Rückschlagventil (10, 110, 210) zu bilden, welches Gas zwischen dem Einlass (22, 122, 222) und dem Auslass (30, 130, 230) durchlässt und eine Flüssigkeitsströmung durch die Filtermedien (80, 180, 280) verhindert.

4. Rückschlagventil nach einem der Ansprüche 1 bis 3, **dadurch gekennzeichnet, dass** der glockenförmige Teil (50, 150, 250, 350) und der Halteteil (70, 170, 270, 370) ein Silikonmaterial umfassen.

5. Rückschlagventil nach einem der vorstehenden Ansprüche,
**dadurch gekennzeichnet, dass** der glockenförmige Teil (50, 150, 250, 350) und der Halteteil (70, 170, 270 ,370) einstückig ausgebildet sind.

6. Rückschlagventil nach einem der vorstehenden Ansprüche,
**dadurch gekennzeichnet, dass** der Halteteil (70, 170, 270, 370) einen querverlaufenden Teil (74, 174, 274, 374) enthält, der sich über die Öffnung der Kammer (28, 128, 228) erstreckend angeordnet ist.

7. Rückschlagventil nach einem der vorstehende Ansprüche, **dadurch gekennzeichnet, dass** ein Flanschteil (176) auf dem äußeren des glockenförmigen Teils (150) zwischen der Mündung (158) und der Sitzfläche (154) vorgesehen ist, wobei der Außendurchmesser des Flansches (176) größer ist als der Durchmesser der Sitzfläche (124).

8. Rückschlagventil nach Anspruch 7, **dadurch gekennzeichnet, dass** der Flansch (176) diskontinuierlich um das Äußere des glockenförmigen Teils (150) führend ausgebildet ist.

9. Rückschlagventil nach Anspruch 7, **dadurch gekennzeichnet, dass** der Flansch (278) durchgehend um das Äußere des glockenförmigen Teils (250) führend ausgebildet ist.

10. Rückschlagventil nach Anspruch 8 oder 9, **dadurch gekennzeichnet, dass** der glockenförmige Teil (150, 250), der Halteteil (170, 270) und der Flansch (176, 278) einstückig ausgebildet sind und aus einem flexiblen Kunstharzmaterial, insbesondere einem Silikonmaterial, bestehen.

11. Rückschlagventil nach einem der vorstehenden Ansprüche, **dadurch gekennzeichnet, dass** der glockenförmige Teil (50, 150, 250) im Inneren (60, 160, 260) ein Gas aufweist, wenn die Mündung (58, 158 ,258 ,358) des glockenförmigen Teils (50, 150, 250) eine Flüssigkeit berührt.

12. Rückschlagventil nach einem der vorstehenden Ansprüche, **dadurch gekennzeichnet, dass** die Kammer (360) in dem glockenförmigen Teil (350) ein geschäumtes Kunstharzmaterial (366) aufweist.

13. Rückschlagventil nach einem der vorstehenden Ansprüche 3 bis 12, **dadurch gekennzeichnet, dass** ein Deckelteil (90, 190, 290) aus einem Kunstharz auf dem Gehäuse (20, 120, 220) gehalten ist und sich über das Filtermedium (80, 180, 280) erstreckt.

14. Rückschlagventil nach einem der vorstehenden Ansprüche, **dadurch gekennzeichnet, dass** die Mündung (358) des glockenförmigen Teils (350) durch einen dünnwandigen Bauteil (368) abgedeckt ist, um ein Gas in dem glockenförmigen Teil (350) einzuschließen.

## Revendications

1. Clapet de non-retour (10, 110, 210) normalement ouvert pour laisser passer un gaz dans une première direction, d'un côté amont du clapet (10, 110, 210) vers un côté aval du clapet (10, 110, 210), et pour laisser passer un gaz dans une direction inverse de la première direction, et pour empêcher une circulation de liquide dans la première direction, comprenant un élément de logement (20, 120, 220) comportant une chambre (28, 128, 228) comportant au moins une paroi latérale (26, 126, 226 ; 32, 132), une ouverture amont (22, 122, 222) et une ouverture aval (30, 130, 230), la paroi latérale (26, 126, 226 ; 32, 132) comprenant une partie de paroi latérale tubulaire dont le diamètre diminue vers au moins une surface de portée (24, 124, 224) alors que la paroi latérale (26, 126, 226 ; 32, 132) de la chambre (28, 128, 228) s'étend en amont, **caractérisé en ce qu'**un élément en forme de cloche (50, 150, 250, 350) est prévu avec une partie de l'élément (50, 150, 250, 350) reçue dans la chambre tubulaire et comportant un orifice (58, 158, 258, 358), une base fermée (52, 152, 252, 352) et une paroi flexible s'étendant entre l'orifice (58, 158, 258, 358) et la base (52, 152, 252, 352) qui comprend une partie annulaire (54, 154, 254, 354) dont le diamètre est supérieur à celui de la surface de portée (24, 124, 224) de la paroi latérale (26, 126, 226 ; 32, 132) de la chambre (28, 128, 228) et supérieur au périmètre de l'orifice (58, 158, 258, 358), dans lequel la densité du volume de l'élément en forme de cloche (50, 150, 250, 350) tel que défini par l'ouverture de l'orifice (58, 158, 258, 358), la base (52, 152, 252, 352) et la paroi entre celles-ci est inférieure à un, **en ce que** l'orifice (58, 158, 258, 358) est disposé dans la partie de chambre tubulaire orientée en amont et la base (52, 152, 252, 352) est généralement en aval de l'orifice (58, 158, 258, 358), et **en ce qu'**un élément de retenue (70, 170, 270, 370) est fixé à la base (52, 152, 252, 352) de l'élément en forme de cloche (50, 150, 250, 350) et est adapté pour venir en prise avec la paroi latérale (32, 132) de la chambre (28, 128, 228) en aval de la surface de portée (24, 124, 224), moyennant quoi l'élément de retenue (70, 170, 270, 370) arrête un mouvement de l'élément en forme de cloche (50, 150, 250, 350) lorsqu'un gaz circule dans la direction inverse de la première direction au-delà de l'élément en forme de cloche (50, 150, 250, 350), et lorsqu'un liquide circule en amont de l'élément en forme de cloche (50, 150, 250, 350), la paroi de l'élément en forme de cloche (50, 150, 250, 350) vient en contact périphérique avec la surface de portée (24, 124, 224) de la chambre (28, 128, 228) pour, de ce fait, arrêter la circulation de liquide en amont de l'élément en forme de cloche (50, 150, 250, 350).

2. Clapet de non-retour selon la revendication 1, **caractérisé en ce que** l'orifice (58, 158, 258, 358) a un diamètre intérieur inférieur au diamètre extérieur de la partie annulaire (54, 154, 254, 354) et l'élément en forme de cloche consiste en une résine synthétique souple, et **en ce que** l'élément de retenue (70, 170, 270, 370) consiste en une résine synthétique et comporte une partie (74, 174, 274, 384) s'étendant latéralement dans la direction en aval adaptée pour venir en prise avec la paroi latérale (32, 132) de la chambre (28, 128, 228) en aval de la surface de portée (24, 124, 224).

3. Clapet de non-retour selon la revendication 2, **caractérisé en ce que** le clapet (10, 110, 210) forme une partie d'un ensemble de filtre à air (100, 200, 300), **en ce que** la chambre (28, 128, 228) est prévue dans un logement (20, 120, 220), la chambre (28, 128, 228) comportant un orifice d'admission (22, 122, 222) et un orifice d'échappement (30, 130, 230) en tant qu'ouvertures amont et aval (22, 122, 222 ; 30, 130, 230), respectivement, **en ce qu'**un moyen de filtration (80, 180, 280) est fixé sur l'orifice d'échappement (30, 130, 230) de la chambre (28, 128, 228), **en ce que** l'élément en forme de cloche (50, 150, 250, 350) est disposé dans la chambre, l'orifice (58, 158, 258, 358) étant orienté vers l'orifice d'admission (22, 122, 222) et la base (52, 152, 252, 352) étant orientée vers l'orifice d'échappement (30, 130, 230), et **en ce que** l'élément de retenue (70, 170, 270, 370) s'étend généralement vers l'orifice d'échappement (30, 130, 230) et comprend, en outre, une partie s'étendant sur l'orifice d'échappement (30, 130, 230) et adaptée pour venir en prise avec une partie du logement (20, 120, 220), moyennant quoi l'élément de retenue (70, 170, 270, 370) arrête un mouvement de l'élément en forme de cloche (50, 150, 250, 350) vers l'orifice d'admission (22, 122, 222) de la chambre (28, 128, 228) lorsque de l'air circule à travers le moyen de filtration (80, 180, 280) vers l'orifice d'admission (22, 122, 222), et la paroi de l'élément en forme de cloche (50, 150, 250, 350) vient en contact périphérique avec la surface de portée (24, 124, 224) de la chambre (28, 128, 228) au niveau d'une partie de paroi de portée initiale pour, de ce fait, arrêter la circulation de liquide lorsqu'un liquide circule à partir de l'orifice d'admission (22, 122, 222) au-delà de la surface de portée (24, 124, 224), pour de ce fait réaliser un clapet de non-retour (10, 110, 210) normalement ouvert laissant passer un gaz entre l'orifice d'admission (22, 122, 222) et l'orifice d'échappement (30, 130, 230) et empêchant une circulation de liquide à travers le moyen de filtration (80, 180, 280).

4. Clapet de non-retour selon l'une quelconque des revendications 1 à 3, **caractérisé en ce que** l'élément en forme de cloche (50, 150, 250, 350) et l'élément de retenue (70, 170, 270, 370) comprennent du silicone.

5. Clapet de non-retour selon l'une quelconque des revendications précédentes, **caractérisé en ce que** l'élément en forme de cloche (50, 150, 250, 350) et l'élément de retenue (70, 170, 270, 370) sont monolithiques.

6. Clapet de non-retour selon l'une quelconque des revendications précédentes, **caractérisé en ce que** l'élément de retenue (70, 170, 270, 370) comprend un élément latéral (74, 174, 274, 374) disposé en travers de l'ouverture de la chambre (28, 128, 228).

7. Clapet de non-retour selon l'une quelconque des revendications précédentes, **caractérisé en ce qu'**un élément formant bride (176) est prévu sur l'extérieur de l'élément en forme de cloche (150) entre l'orifice (158) et la surface de portée (154), dans lequel le diamètre extérieur de la bride (176) est supérieur au diamètre de la surface de portée (124).

8. Clapet de non-retour selon la revendication 7, **caractérisé en ce que** la bride (176) est discontinue autour de l'extérieur de l'élément en forme de cloche (150).

9. Clapet de non-retour selon la revendication 7, **caractérisé en ce que** la bride (278) est continue autour de l'extérieur de l'élément en forme de cloche (250).

10. Clapet de non-retour selon les revendications 8 ou 9, **caractérisé en ce que** l'élément en forme de cloche (150, 250), l'élément de retenue (170, 270) et la bride (176, 278) sont monolithiques et comprennent une résine synthétique souple, particulièrement du silicone.

11. Clapet de non-retour selon l'une quelconque des revendications précédentes, **caractérisé en ce que** l'intérieur (60, 160, 260, 360) de l'élément en forme de cloche (50, 150, 250) comprend un gaz lorsque l'orifice (58, 158, 258, 358) de l'élément en forme de cloche (50, 150, 250) est en contact avec un liquide.

12. Clapet de non-retour selon l'une quelconque des revendications précédentes, **caractérisé en ce que** la chambre (360) dans l'élément en forme de cloche (350) comprend une résine synthétique alvéolaire (366).

13. Clapet de non-retour selon l'une quelconque des revendications précédentes 3 à 12, **caractérisé en ce qu'**un élément de recouvrement (90, 190, 290) en résine synthétique est retenu sur le logement (20, 120, 220) et s'étend sur le moyen de filtration (80, 180, 280).

14. Clapet de non-retour selon l'une quelconque des revendications précédentes, **caractérisé en ce que** l'orifice (358) de l'élément en forme de cloche (350) est recouvert par un élément à paroi mince (368) pour enfermer un gaz dans l'élément en forme de cloche (350).
